(19) Europäisches Patentamt
European Patent Office
Office européen des brevets

(11) **EP 0 735 287 A1**

(12) **EUROPÄISCHE PATENTANMELDUNG**

(43) Veröffentlichungstag:
02.10.1996 Patentblatt 1996/40

(51) Int. Cl.⁶: **F16C 13/00**

(21) Anmeldenummer: 96104030.0

(22) Anmeldetag: 14.03.1996

(84) Benannte Vertragsstaaten:
DE FI FR GB

(30) Priorität: 29.03.1995 DE 19511595

(71) Anmelder: Voith Sulzer Finishing GmbH
47803 Krefeld (DE)

(72) Erfinder: Schmitz, Christian Wimmar
47904 Kempen (DE)

(74) Vertreter: Knoblauch, Ulrich, Dr.-Ing.,
Patentanwälte Dr. Knoblauch et al
Kühhornshofweg 10
60320 Frankfurt (DE)

(54) **Kalanderwalze mit einem zylindrischen Basiskörper**

(57) Eine Kalanderwalze (1) besitzt einen zylindrischen Basiskörper (2). Dieser weist eine dünne, nicht selbsttragende Umfangswand (4) und eine mit deren Innenseite verbundene Stützkonstruktion (5) aus dünnwändigem Zellenmaterial auf. Zumindest ein Teil der die Zellen (16) begrenzenden Wände verläuft etwa in Radialrichtung. Dies ergibt eine stabile und sehr leichte Kalanderwalze.

Fig.1

**Beschreibung**

Die Erfindung bezieht sich auf eine Kalanderwalze mit einem zylindrischen Basiskörper, der insbesondere mit einem elastischen Bezug versehen ist.

Derartige Walzen werden in Kalandern eingesetzt, die der abschließenden Behandlung einer Papierbahn dienen, damit diese eine gewünschten Wert der Glätte, des Glanzes, der Dicke, des Bulks u.dgl. erhält, können aber auch zur Behandlung von Kunststoffolien, Textilbahnen u.dgl. verwendet werden. Wenn eine mit einem elastischen Bezug versehene Walze zusammen mit einer harten Metallwalze einen Arbeitsspalt bildet, ist die Oberfläche der harten Walze im wesentlichen für die Oberflächenbeschaffenheit und die elastische Walze für die Gleichmäßigkeit der Dichte des Materials verantwortlich. In den meisten Fällen wird eine solche Kalanderwalze in einem endseitig belasteten Stapel aus harten und elastischen Walzen verwendet.

Die bekannten Kalanderwalzen besitzen einen Basiskörper in Form eines Vollzylinders oder Hohlzylinders, der so stabil ausgelegt ist, daß er die im Kalanderbetrieb auftretenden Kräfte aufnehmen kann. Eine solche Walze ist sehr schwer, was aus vielerlei Gründen unerwünscht ist, beispielsweise wegen der Schwierigkeiten beim Transport oder wegen der hohen Materialkosten. Eine ganz besondere Rolle spielt das Gewicht bei einem Kalander mit einem Walzenstapel, weil nämlich in den Arbeitsspalten von oben nach unten die Streckenlast jeweils um das Gewicht der darüber liegenden Walzen zunimmt. Es ist daher nicht möglich, bereits in den oberen Walzenspalten mit einer hohen Streckenlast zu arbeiten.

Der Erfindung liegt daher die Aufgabe zugrunde, eine Kalanderwalze der eingangs beschriebenen Art anzugeben, die bei geringerem Gewicht eine ausreichende Stabilität besitzt.

Diese Aufgabe wird erfindungsgemäß dadurch gelöst, daß der Basiskörper eine dünne, nicht selbsttragende Umfangswand und eine mit deren Innenseite verbundene Stützkonstruktion aus dünnwandigem Zellenmaterial aufweist, bei dem zumindest ein Teil der die Zellen bildenden Wände etwa in Radialrichtung verläuft.

Die durch die Stützkonstruktion versteifte Umfangswand ist in der Lage, die im Betrieb der Kalanderwalze auftretenden Kräfte aufzunehmen. Dies gilt insbesondere für Radialkräfte, die von den etwa radial gerichteten Wänden weitergeleitet werden. Insgesamt erhält man eine sehr stabile Kalanderwalze mit sehr geringem Gewicht. Dies macht die Kalanderwalze insbesondere zu einer Verwendung innerhalb eines Walzenstapels geeignet.

Vorteilhaft ist es, daß die Zellen durch in gleicher Richtung verlaufende Seitenwände begrenzt und an mindestens einem Ende mit einer Abdeckwand verbunden sind. Es ergeben sich ganz oder weitgehend geschlossene Zellen. Diese sind außerordentlich steif, da sie an den Enden durch die Abdeckwand fixiert und außerdem durch ihre Verbindung mit Nachbarwänden gegen eine Verformung gesichert sind.

Besonders günstig ist es, daß die Stützkonstruktion eine Vielzahl von miteinander verbundenen Einzelelementen des Zellenmaterials aufweist. Durch die Unterteilung in Einzelelemente kann man den Verlauf der die Zelle begrenzenden Wände innerhalb des Basiskörpers variieren und deshalb den auftretenden Kräften besonders gut anpassen. Ein anderer Vorteil besteht darin, daß man kleinere und daher steifere Zellen vorsehen kann.

Eine bevorzugte Möglichkeit der Unterteilung besteht darin, daß die Einzelelemente Ronden sind, bei denen die Zellen jeweils zwischen zwei sich in Querschnittsebenen erstreckenden Stirnwände angeordnet sind. Hier nehmen die durch die Zellen im Abstand gehaltenen Stirnwände die Radialkräfte auf, die auf eine Kalanderwalze wirken. Zug- und Druckkräfte, die wegen einer Durchbiegung einer Walze in Axialrichtung wirken, werden von der Umfangswand, gegebenenfalls weiteren, sich konzentrisch hierzu erstreckenden Wänden und den in Axialrichtung verlaufenden Komponenten der Seitenwände der Zellen aufgenommen.

Eine empfehlenswerte Möglichkeit besteht darin, daß die Zellen der Einzelelemente sich parallel zu den Stirnwänden erstrecken und benachbarte Ronden im Winkel zueinander versetzt sind. Hier sind auch die Seitenwände der Zellen an der Aufnahme radialer Kräfte beteiligt.

Darüber hinaus wird durch den Winkelversatz erreicht, daß sich über den Umfang der Walze etwa gleichmäßige Verhältnisse ergeben.

Eine Alternative hierzu besteht darin, daß die Seitenwände der Zellen der Einzelelemente senkrecht zu den Stirnwänden verlaufen. Dies ergibt eine besonders gute Aussteifung der von den Seitenwänden der Zelle im Abstand gehaltenen Stirnwände der Ronden.

Vielfach empfiehlt es sich, daß die Ronden mit einem Mittelloch zum Einsetzen einer Walzenachse versehen sind. Die Walzenachse braucht bezüglich der Steifigkeit nichts oder nicht viel beizutragen und kann daher mit kleinem Durchmesser und geringem Gewicht ausgeführt werden.

Bei einem anderen bevorzugten Ausführungsbeispiel ist dafür gesorgt, daß sich zwischen einer Walzenachse und der Umfangswand mindestens eine zylindrische Schicht aus in Umfangsrichtung versetzten Einzelelementen mit jeweils etwa radial stehenden Seitenwänden der Zellen befindet. Bei dieser Konstruktion nehmen die Seitenwände die gesamte Radialbelastung der Kalanderwalze auf. Dies ist möglich, weil durch die Unterteilung in Einzelelemente eine Anpassung des Verlaufs der Seitenwände an den jeweiligen Umfangsbereich erfolgen kann. Druck- und Zugkräfte, die in Axialrichtung wirken, werden wiederum von der Umfangswand, gegebenenfalls weiteren hierzu konzentrischen Wänden und den sich in Axialrichtung erstreckenden Komponenten der Seitenwände der Zellen aufgenommen.

Günstig ist es ferner, daß die in Umfangsrichtung benachbarten Einzelelemente in Axialrichtung gegeneinander versetzt sind. Hierbei entfallen weitgehend Störstellen, die sich sonst durch das Aneinanderstoßen der Einzelelemente ergeben könnten.

Besonders gute Ergebnisse zeigten sich, wenn das Zellenmaterial einen honigwabenartigen Aufbau hat. Die Zellen besitzen dann einen sechseckigen Querschnitt, was in Verbindung mit den Nachbarzellen und der Abdeckung an den Zellenenden zu außerordentlich steifen Gebilden führt. Ein solches "honeycomb"-Material läßt sich auch leicht herstellen, weil es aus Bahnen bestehen kann, die abwechselnd mit der einen und der anderen Nachbarbahn verbunden sind.

Eine Alternative besteht darin, daß das Zellenmaterial einen wellpappenartigen Aufbau hat. Auch dieses Material ergibt eine ausreichende Steifigkeit und ist billig herzustellen.

Mit besonderem Vorteil besteht das Zellenmaterial im wesentlichen aus faserverstärktem Kunststoff. Insbesondere bei Verwendung von Kohlefasern ergibt sich eine sehr hohe Steifigkeit bei geringstmöglichem Gewicht.

Günstig ist es auch, wenn das Zellenmaterial ein hochzugfester Kunststoff, insbesondere ein im wesentlichen aus Aramid bestehendes Fasermaterial ist. In der Praxis kommen aber auch andere Materialien in Betracht, wie Papier, Pappe oder Metallblech, beispielsweise Aluminiumblech. Die Verbindung der Wände untereinander und mit Abdeckwänden, Stirnwänden und Umfangswand richtet sich nach dem verwendeten Material. Insbesondere kommt eine Klebung in Betracht. Daneben sind aber auch Schweißungen, Lötungen o.dgl. möglich.

Es empfiehlt sich auch, daß die Umfangswand durch ein dünnwandiges, geschlossenes Rohr gebildet ist. Ein geschlossenes Rohr besitzt keine Trennfuge, so daß sich eine zylindrische glatte Oberfläche ergibt. Außerdem kann die Stützkonstruktion unter Vorspannung in die Umfangswand eingebaut werden, wodurch die Steifigkeit erhöht wird.

Eine weitere materialsparende Ausgestaltung besteht darin, daß der elastische Bezug die Umfangswand bildet.

Die Erfindung wird nachstehend anhand in der Zeichnung dargestellter bevorzugter Ausführungsbeispiele näher erläutert. Es zeigen:

Fig. 1    eine erfindungsgemäße Kalanderwalze, teilweise im Schnitt,

Fig. 2    Ronden, aus denen die Stützkonstruktion des Basiskörpers besteht,

Fig. 3    einen Basiskörper der Fig. 1 in räumlicher Darstellung,

Fig. 4    einen Schnitt durch eine Ronde,

Fig. 5    einen Schnitt durch eine abgewandelte Ronde,

Fig. 6    einen Ausschnitt aus einer anders aufgebauten Ronde,

Fig. 7    Teile einer Stützkonstruktion gemäß einer weiteren Ausführungsform in perspektivischer und geschnittener Darstellung und

Fig. 8    eine Teil-Abwicklung des Umfangs der Stützkonstruktion der Fig. 7.

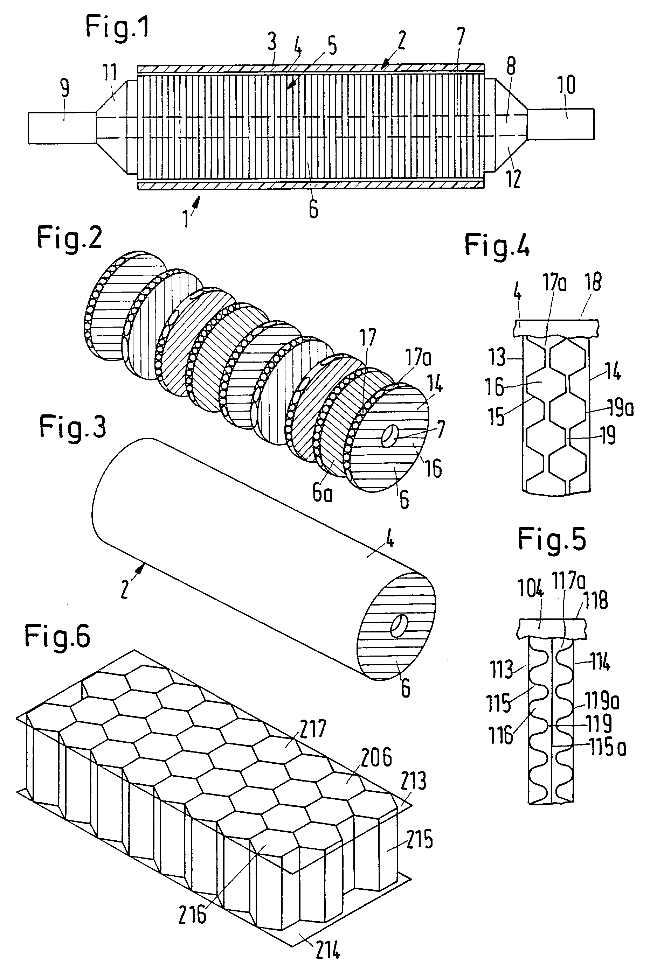

Die in Fig. 1 veranschaulichte Kalanderwalze 1 besitzt einen Basisköper 2 und einen auf ihm angeordneten, insbesondere aufgeschrumpften Bezug 3 aus einem elastischen Kunststoff, beispielsweise Silikon-Kautschuk oder Epoxidharz. Der Basiskörper 2 weist eine Umfangswand 4 auf, die so dünn ist, daß sie nicht selbsttragend ist, also sich unter den im Betrieb auftretenden Kräften verformen würde, wenn sie nicht durch eine in ihrem Innern angeordnete Stützkonstruktion 5 versteift wäre. Diese Stützkonstruktion besteht aus einer Vielzahl von Einzelelementen 6 in der Form von kreisförmigen Ronden, die ein zentrisches Loch 7 besitzen. Durch dieses ist eine Walzenachse 8 hindurchgesteckt, welche die beiden Lagerzapfen 9 und 10 der Kalanderwalze miteinander verbindet und zwei Druckstücke 11 und 12 trägt. Die Umfangswand 4 ist ein zylindrisches Rohr, das mit der Stützkonstruktion 5 verklebt ist. Auch die Walzenachse 8 kann mit der Stützkonstruktion verklebt sein.

Wie sich aus einer Zusammenschau der Fig. 2 bis 4 ergibt, weist jede Ronde 6 zwei Stirnwände 13 und 14 auf zwischen denen sich geformte Seitenwände 15 befinden, die Zellen 16 begrenzen, welche sich alle in der gleichen Richtung erstrecken, wie dies in Fig. 2 angedeutet ist. Die Enden 17 der Zellen 16 sind mit einer Abdeckwand 18 verklebt, die im Ausführungsbeispiel durch die Umfangswand 4 gebildet ist. Da diese die Ronde 6 zylindrisch umgibt, wird am Ende 17 ein kleiner Flächenbereich, am Ende 17a dagegen wegen der Schrägstellung ein größerer Flächenbereich der Zelle 16 abgedeckt. Innerhalb einer Ronde 6 erstrecken sich die Zellen 16 parallel zueinander und zu den Stirnwänden 13 und 14. Benachbarte Ronden 6 und 6a sind um einen Winkel gegeneinander versetzt, so daß auch die Richtung der Zellen 16 voneinander abweicht. Fig. 2 läßt erkennen, daß durch gleichmäßigen Winkelversatz der Einfluß der Lage der Zellen gleichmäßig verteilt wird. Die aneinanderliegenden Stirnwände der einzelnen Ronden werden miteinander verklebt.

Im Betrieb wird die gesamte Radialbelastung von den Stirnwänden 13 und 14 und teilweise auch von den Seitenwänden 15 der Zellen 16 aufgenommen. In Axialrichtung wirkende Druck- oder Zugkräfte werden von den in Axialrichtung verlaufenden Komponenten der Seitenwände 15 abgefangen.

Wie Fig. 4 schematisch zeigt, werden die Seitenwände 15 aus trapezförmig geformten Bahnen hergestellt, die jeweils dort, wo sie an der Nachbarwand anliegen, eine Klebeverbindung 19 oder 19a bilden.

Während Fig. 4 ein honigwabenartiges Zellenmaterial zeigt, veranschaulicht Fig. 5 ein wellpappenartiges Zellenmaterial. Für entsprechende Teile werden um 100 erhöhte Bezugszeichen verwendet. Der wesentliche Unterschied besteht darin, daß zwischen den Stirnwänden 113 und 114 nicht trapezförmig verformte Seitenwände 15, sondern wellenförmig verformte Seitenwände 115 und gegebenenfalls eine zu den Stirnwänden parallele Seitenwand 115a angeordnet sind. Abweichungen vom Querschnitt der Zellenform sind in vielfacher Hinsicht möglich. Beispielsweise können die Zellen einen quadratischen Querschnitt besitzen.

Fig. 6 erläutert ein weiteres Ausführungsbeispiel, bei dem für entsprechende Teile um 200 erhöhte Bezugszeichen verwendet werden. Die Figur zeigt einen Ausschnitt aus einer Ronde 206, die zwischen zwei Stirnseiten 213 und 214 Seitenwände 215 aufweist, die senkrecht auf den Stirnwänden stehen. Sie begrenzen sechseckige Zellen 216, die an beiden Enden 217 mit den Stirnwänden 213 und 214 verklebt sind. Auch hier übernehmen die Stirnwände die aufgebrachten Radialkräfte. Die axial wirkenden Druck- und Zugkräfte werden von den Seitenwänden 215 und der nicht veranschaulichten Umfangswand aufgenommen.

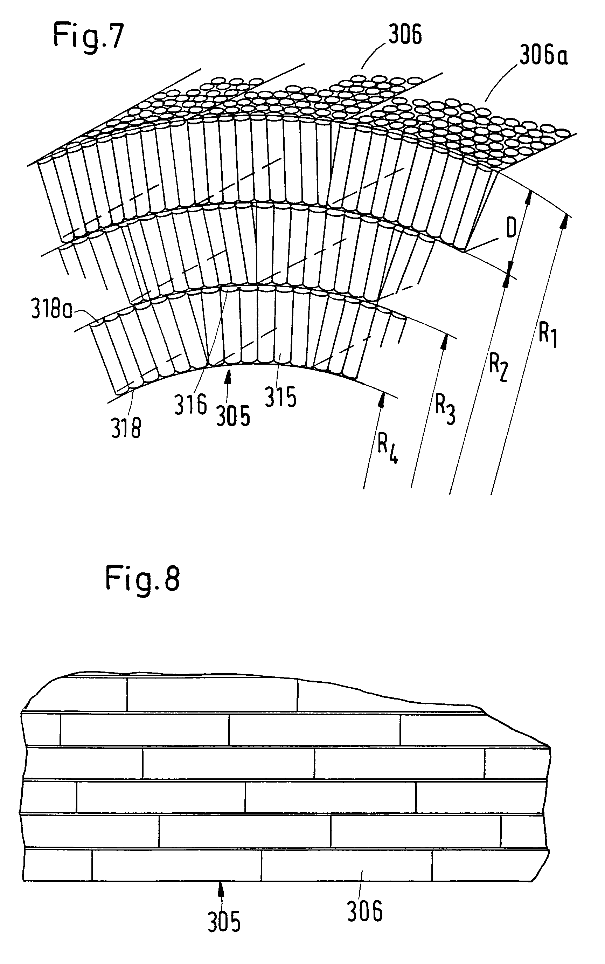

Bei der Ausführungsform der Fig. 7 und 8, bei denen für entsprechende Teile um 300 erhöhte Bezugszeichen verwendet werden, besteht die zwischen Walzenachse 8 und Umfangswand 4 ausgebildete Stützkonstruktion 305 aus Einzelelementen 306, die in mehreren Schichten übereinander angeordnet sind, von denen in Fig. 7 lediglich drei Schichten veranschaulicht sind. Jedes Einzelelement 306 hat eine sich in Richtung der Walzenachse erstreckende Länge von etwa 50 bis 100 cm und verläuft in Umfangsrichtung über einen Winkel von 10 bis 20°. Jedes Einzelelement 306 hat etwa die Form der Schichtung nach Fig. 6, wobei sich die Seitenwände 315 der einzelnen Zellen 316 etwa radial erstrecken und die Enden der Zellen durch eine innere Abdeckwand 318 und eine äußere Abdeckwand 318a abgedeckt sind. Diese Abdeckwände sind fest mit der benachbarten Abdeckwand der darüber oder darunter befindlichen Schicht verklebt. Die in Umfangsrichtung benachbarten Einzelelemente 306 und 306a sind in Axialrichtung gegeneinander versetzt (Fig. 8).

Bei einem Ausführungsbeispiel der zuletzt genannten Art hatte eine Kalanderwalze einen Basiskörper 2 mit einem Durchmesser von 700 mm und eine Walzenachse 8 mit einem Durchmesser von 200 mm. Dazwischen befanden sich zehn Schichten mit einer Schichtdicke D = 25 mm. Die Außenradien der Schichten betrugen von außen nach innen

R1 = 350 mm

R2 = 325 mm

R3 = 300 mm

R4 = 275 mm usw.

Selbstverständlich können die Abdeckwände 318 und 318a den Radien entsprechend gebogen sein.

Die Verwendung des Basiskörpers 2 in Verbindung mit einem elastischen Bezug 3 hat den Vorteil, daß geringfügige Ungleichmäßigkeiten an der Oberfläche des Basiskörpers 2 zulässig sind, weil das elastische Material einen Ausgleich bietet. Der Basiskörper kann aber auch als Tragkörper für eine Metallschicht dienen, so daß es auch möglich ist, eine harte Walze mit geringerem Gewicht herzustellen.

Bei einer bevorzugten Ausführungsform wurde als Werkstoff für das Zellenmaterial ein durch Glasfasern oder vorzugsweise durch Kohlefasern verstärkter Kunststoff, wie Epoxidharz, verwendet, beispielsweise im Verhältnis 65 % Fasern und 35 % Kunststoff. Eine ebenfalls günstige Alternative sieht vor, daß als Zellenmaterial ein im wesentlichen aus Aramid bestehendes Fasermaterial verwendet wird, wie es die Firma Du Pont Co. Inc. unter der Bezeichnung "Kevlar" in Form von para-Aramid und unter der Bezeichnung "Nomex" in Form von meta-Aramid auf den Markt bringt. Das als Ausgangsmaterial verwendete Blattmaterial kann vorzugsweise zwischen 87 und 99 % aus Aramidfasern bestehen. Beide Materialien haben eine für Kunststoff sehr hohe Wärmebeständigkeit. Ihre physikalischen Eigenschaften bleiben daher auch bei sehr hohen Beanspruchungen erhalten.

Der beanspruchte Basiskörper zeichnet sich durch extrem geringes Gewicht, außerordentliche Steifigkeit und hohe Druckfestigkeit aus, so daß bei Verwendung in einer Kalanderwalze sich folgende Vorteile ergeben: Durch das geringe Gewicht des Walzenpakets wird eine steilere Kennlinie für die Druckcharakteristik im Walzenstapel des Kalanders erreicht. Es ergibt sich eine geringere Walzenlast und ein geringerer Energiebedarf. Die hohe Steifigkeit verhindert ein Auslenken des Walzenkörpers durch tangentiale Kräfte. Die hohe Wärmebeständigkeit erlaubt es, die guten physikalischen Eigenschaften bis zu Temperaturen von über 300° C auszunutzen. Weil keine schwere, dicke Walzenachse erforderlich ist, spielt auch das Achsengewicht nur eine untergeordnete Rolle. Bei Erneuerung des elastischen Bezuges braucht lediglich ein neuer vorgefertigter Bezug in der Form eines Mantels aufgezogen zu werden. Bei sauberer Verklebung sind die Basiskörper völlig wartungsfrei. Das geringe Gewicht erleichtert die Handhabung und verbilligt den Transport.

**Patentansprüche**

1. Kalanderwalze mit einem zylindrischen Basiskörper, der insbesondere mit einem elastischen Bezug versehen ist, dadurch gekennzeichnet, daß der Basiskörper (2; 302) eine dünne, nicht selbsttragende Umfangswand (4) und eine mit deren Innenseite verbundene Stützkonstruktion (5; 305) aus dünnwandigem Zellenmaterial aufweist, bei dem zumindest ein Teil der die Zellen (16; 116; 216; 316) bildenden Wände etwa in Radialrichtung verläuft.

2. Kalanderwalze nach Anspruch 1, dadurch gekennzeichnet, daß die Zellen (15; 116; 216; 316) durch in gleicher Richtung verlaufende Seitenwände (15; 115; 215; 315) begrenzt und an mindestens einem Ende mit einer Abdeckwand (18; 118; 318, 318a) verbunden sind.

3. Kalanderwalze nach Anspruch 1 oder 2, dadurch gekennzeichnet, daß die Stützkonstruktion (5; 305) eine Vielzahl von miteinander verbundenen Einzelelementen (6; 206; 306) des Zellenmaterials aufweist.

4. Kalanderwalze nach Anspruch 3, dadurch gekennzeichnet, daß die Einzelelemente (6; 206) Ronden sind, bei denen die Zellen (16; 116) jeweils zwischen zwei sich in Querschnittsebenen erstreckenden Stirnwände (13, 14; 113, 114) angeordnet sind.

5. Kalanderwalze nach Anspruch 4, dadurch gekennzeichnet, daß die Zellen (16) der Einzelelemente (6) sich parallel zu den Stirnwänden (13, 14) erstrecken und benachbarte Ronden (Einzelelemente 6, 6a) im Winkel zueinander versetzt sind.

6. Kalanderwalze nach Anspruch 4, dadurch gekennzeichnet, daß die Seitenwände (115) der Zellen (116) der Einzelelemente (106) senkrecht zu den Stirnwänden (113, 114) verlaufen.

7. Kalanderwalze nach einem der Ansprüche 4 bis 6, dadurch gekennzeichnet, daß die Ronden (Einzelelemente 6) mit einem Mittelloch (7) zum Einsetzen einer Walzenachse (8) versehen sind.

8. Kalanderwalze nach Anspruch 3, dadurch gekennzeichnet, daß sich zwischen einer Walzenachse (8) und der Umfangswand (4) mindestens eine zylindrische Schicht aus in Umfangsrichtung versetzten Einzelelementen (306) mit jeweils etwa radial stehenden Seitenwänden (315) der Zellen (316) befindet.

9. Kalanderwalze nach Anspruch 8, dadurch gekennzeichnet, daß die in Umfangsrichtung benachbarten Einzelelemente (306) in Axialrichtung gegeneinander versetzt sind.

10. Kalanderwalze nach einem der Ansprüche 1 bis 9, dadurch gekennzeichnet, daß das Zellenmaterial einen honigwabenartigen Aufbau hat (Fig. 4).

11. Kalanderwalze nach einem der Ansprüche 1 bis 9, dadurch gekennzeichnet, daß das Zellenmaterial einen wellpappenartigen Aufbau hat (Fig. 5).

12. Kalanderwalze nach einem der Ansprüche 1 bis 11, dadurch gekennzeichnet, daß das Zellenmaterial im wesentlichen aus faserverstärktem Kunststoff besteht.

13. Kalanderwalze nach einem der Ansprüche 1 bis 11, dadurch gekennzeichnet, daß das Zellenmaterial ein im wesentlichen aus Aramid bestehendes Fasermaterial ist.

14. Kalanderwalze nach einem der Ansprüche 1 bis 13, dadurch gekennzeichnet, daß die Umfangswand (4) durch ein dünnwandiges, geschlossenes Rohr gebildet ist.

15. Kalanderwalze nach einem der Ansprüche 1 bis 14, dadurch gekennzeichnet, daß der elastische Bezug (3) die Umfangswand (4) bildet.

# Fig.1

# Fig.2

# Fig.3

# Fig.4

# Fig.5

# Fig.6

Fig.7

Fig.8

7

Europäisches
Patentamt

**EUROPÄISCHER RECHERCHENBERICHT**

Nummer der Anmeldung

EP 96 10 4030

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.6) |
|---|---|---|---|
| A | GB-A-2 061 455 (THE B.U.S.M. CY)<br>* das ganze Dokument *<br>--- | 1 | F16C13/00 |
| A | US-A-3 711 913 (GALEONE ET AL.)<br>--- | | |
| A | US-A-5 097 596 (HOOGESTEGER ET AL.)<br>--- | | |
| A | US-A-5 387 451 (MILLER)<br>--- | | |
| A | US-A-3 907 232 (ODERMATT)<br>----- | | |

| | RECHERCHIERTE SACHGEBIETE (Int.Cl.6) |
|---|---|
| | F16C<br>D21G<br>D21F<br>B29C |

Der vorliegende Recherchenbericht wurde für alle Patentansprüche erstellt

| Recherchenort | Abschlußdatum der Recherche | Prüfer |
|---|---|---|
| DEN HAAG | 24.Juni 1996 | BEGUIN, C |

EPO FORM 1503 03.82 (P04C03)